Europäisches Patentamt

European Patent Office

Office européen des brevets

(11) Numéro de publication: **0 173 603**
A1

## (12) DEMANDE DE BREVET EUROPEEN

(21) Numéro de dépôt: **85401469.3**

(22) Date de dépôt: **17.07.85**

(51) Int. Cl.⁴: **B 01 D 33/04**, B 30 B 9/10, B 30 B 9/24

(30) Priorité: **25.07.84 FR 8411804**

(43) Date de publication de la demande: **05.03.86**
**Bulletin 86/10**

(84) Etats contractants désignés: **BE CH DE GB IT LI**

(71) Demandeur: **"DEGREMONT" Société dite:, 183, Avenue
du 18 Juin 1940, F-92508 Rueil-Malmaison Cédex (FR)**
Demandeur: **FILTRES PHILIPPE S.A., 111, Boulevard
Henri Barbusse, F-78800 houilles (FR)**

(72) Inventeur: **Fayoux, Christian, 7, Avenue des Sablons,
F-91350 Grigny II (FR)**
Inventeur: **Haubry, André, Lotissement les Belles Vues
No. 3 Mezy, F-78250 Meulan (FR)**

(74) Mandataire: **Armengaud, Charles, Cabinet ARMENGAUD
AINE 3, Avenue Bugeaud, F-75116 Paris (FR)**

(54) Appareil pour la séparation de la phase liquide d'une suspension solide-liquide.

(57) Appareil pour la séparation de la phase liquide d'une
suspension solide-liquide, dans lequel la suspension préalablement épaissie est disposée entre deux bandes sans fin
filtrantes et soumise à une pression au moyen d'un module
presseur animé d'un mouvement de va-et-vient, ledit appareil comportant au moins deux enceintes étanches juxtaposées et disposées parallèlement l'une à l'autre, munies chacune d'une membrane gonflable assurant la pression de filtration, caractérisé en ce que chaque enceinte est constituée
par deux plaques ou plateaux (10, 11, 12, 13, 14) disposés l'un
en face de l'autre et dont l'une des faces est munie d'une
membrane gonflable, la face munie d'une membrane de chaque plateau étant placée en regard de la face, non munie
d'une membrane, de la plaque ou du plateau suivant.

- 1 -

## Appareil pour la séparation de la phase liquide d'une suspension solide-liquide

La présente invention concerne un appareil pour la séparation de la phase liquide d'une suspension solide-liquide, applicable en particulier à l'élimination partielle de l'eau contenue dans la suspension solide-liquide que constituent les boues provenant des installations de traitement des eaux.

De nombreux appareils tels que filtres-presses, filtres sous vide, centrifugeuses, filtres à bandes presseuses ont déjà été décrits, qui permettent la séparation de la phase liquide d'une suspension solide-liquide. Cependant ces appareils présentent certains inconvénients : faiblesse de rendement d'extraction de la phase liquide pour les uns, difficultés de manutention et d'exploitation pour les autres.

Il est connu que la technique la plus performante est la mise en pression de la suspension sur un médium de filtration, tel que fibres ou fils naturels, synthétiques ou métalliques, choisis en fonction de leur porosité vis-à-vis de la suspension à traiter.

Cependant la pression applicable est limitée par les caractéristiques physiques de la suspension, notamment l'évolution de sa viscosité, de manière à éviter tout départ de la suspension hors de l'interface de séparation constituée par le médium filtrant.

Des appareils connus remédient à cet inconvénient par l'utilisation d'une enceinte fermée emprisonnant la suspension, la paroi de l'enceinte constituant l'interface de séparation. L'inconvénient de ces appareils réside dans la discontinuité de leur marche, nécessitée par le fait qu'à un moment donné, il devient nécessaire d'éliminer la suspension concentrée, appelée "gâteau" de l'intérieur de l'enceinte.

Cette opération est le plus souvent longue et nécessite beaucoup de main d'oeuvre.

On sait par ailleurs que les performances d'un appareil de séparation de la phase liquide d'une suspension solide-liquide, sont liées aux dimensions de l'enceinte de séparation et aussi à la concentration de la suspension amenée à l'appareil.

Le brevet français publié sous le n° 2.374.937 décrit un procédé pour la filtration continue d'une masse imprégnée de liquide dans lequel on exerce de manière discontinue une pression sur des portions successives de la masse à filtrer défilant en continu et un appareil pour mettre en oeuvre le procédé comportant un tapis transporteur animé d'un mouvement continu, sur lequel est déposée la masse à filtrer que l'on soumet à une forte pression au moyen d'un module presseur mobile, dans une chambre fermée unicellulaire. Le module presseur est animé d'un mouvement cyclique, comprenant, dans un premier temps, l'application de la pression sur la masse imprégnée de liquide et le déplacement de la presse en synchronisme avec le tapis transporteur et, dans un second temps, le relâchement de la pression et le retour du module à son point de départ.

Un tel appareil bénéficie d'une alimentation continue en boue liquide et assure une production continue de gâteau. Le gâteau formé est extrait de façon entièrement automatisée ; le procédé présente en outre la possibilité de faire varier la siccité du gâteau en fonction du débit massique.

Cependant, les impératifs mécaniques liés aux dimensions du module de pressage limitent la surface de filtration.

Le perfectionnement objet de la présente invention permet d'augmenter de façon importante la surface de filtration en conservant les intérêts principaux du procédé par transformation du module presseur unicellulaire en module presseur multicellulaire avec juxtaposition d'une pluralité de chambres de filtration.

L'invention consiste en un appareil pour la séparation de la phase liquide d'une suspension solide-liquide, dans lequel la suspension préalablement épaissie est disposée entre deux bandes sans fin filtrantes et soumise à une pression au moyen d'un module presseur animé d'un mouvement de va-et-vient, caractérisé en ce qu'il comporte au moins deux enceintes étanches juxtaposées et disposées parallèlement l'une à l'autre, munies chacune d'une membrane gonflable assurant la pression de filtration.

Suivant une caractéristique de l'invention, chaque enceinte est constituée par deux plaques ou plateaux disposés l'un en face de l'autre et dont l'une des faces est munie d'une membrane gonflable, la face munie d'une membrane de chaque plateau étant placée en regard de la face, non munie d'une membrane, de la plaque ou plateau suivant.

Dans une autre disposition de l'invention chaque enceinte est constituée par une plaque pleine associée à un cadre enserrant une membrane.

Suivant une disposition préférée de l'invention, l'étanchéité des enceintes de filtration est assurée par le serrage de l'ensemble des plaques les unes sur les autres par des moyens de pression, tels que vérins hydrauliques ou pneumatiques.

Suivant une autre disposition de l'invention, l'étanchéité des enceintes est assurée par le serrage mécanique des plaques.

Conformément à l'invention, le module constitué par l'ensemble des enceintes de filtration est soumis à un mouvement de va-et-vient au moyen de tout dispositif convenable quelconque tel que vérin, ou par entraînement mécanique, ce mouvement de va-et-vient étant effectué à une vitesse et sur une distance réglables.

Egalement conformément à l'invention, les bandes filtrantes sans fin entre lesquelles est disposée la suspension solide-liquide se déplacent dans les enceintes de filtration avec un mouvement discontinu, de brefs temps d'arrêt, par exemple de 8 à 10 secondes, étant provoqués à intervalles réguliers par pincement des bandes entre des moyens tels que rouleaux, lors du mouvement de retour à sa position d'origine du module de filtration. Ces dispositions déterminent, suivant l'invention, un déplacement relatif des bandes filtrantes et du module de filtration lors du mouvement de retour de ce dernier et, par voie de conséquence, une progression du gâteau de filtration formé vers la sortie de l'appareil.

Chaque enceinte de filtration qui entre dans la constitution du module est mobile et séparable des autres enceintes. Elles sont disposées en série, verticalement ou horizontalement.

L'utilisation d'une pluralité d'enceintes de filtration juxtaposées permet d'exercer une série d'actions de filtration sur la même portion de la masse à filtrer, d'où résulte une meilleure siccité de cette masse.

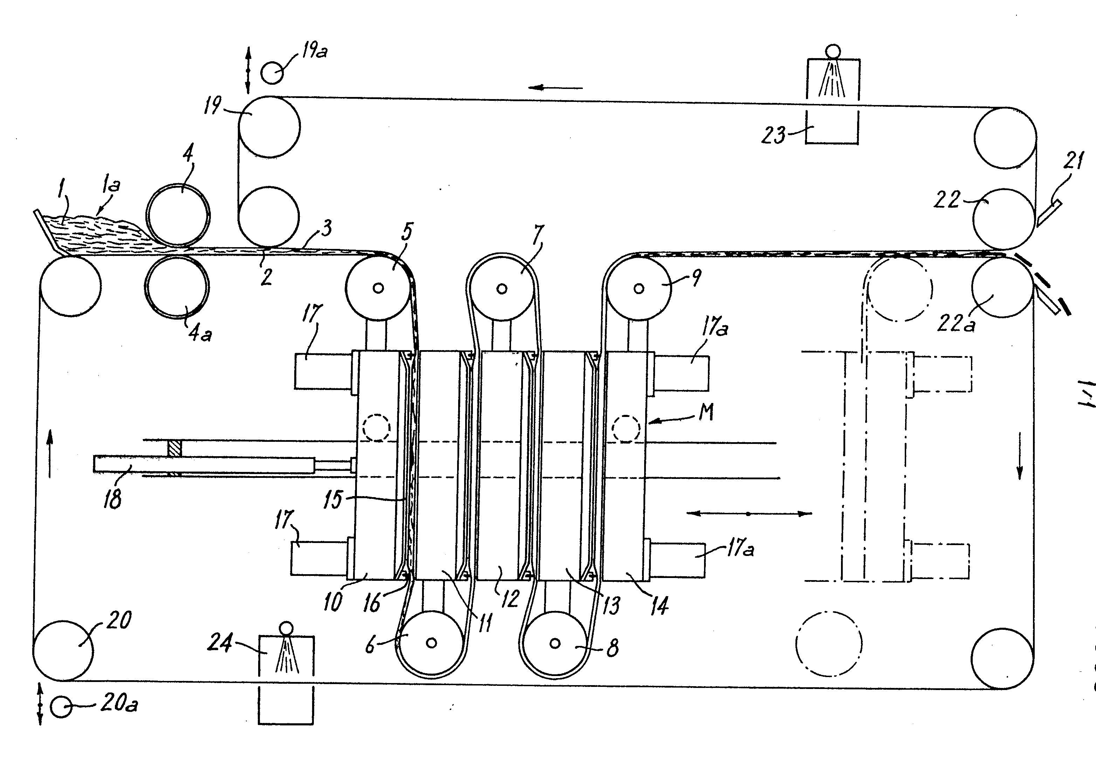

On a décrit ci-après uniquement à titre d'exemple une forme de réalisation possible de l'invention, cette description étant faite en référence à la figure unique du dessin annexé qui est une vue schématique en coupe transversale de cet exemple de réalisation de l'appareil suivant l'invention.

Ainsi qu'on le voit sur la figure du dessin annexé, la suspension solide-liquide 1 accumulée dans la zone la et préalablement épaissie de façon connue jusqu'à obtention d'un état pâteux, par voie d'égouttage avec ou sans polyélectrolyte, par exemple, ou par passage sur une table sous vide, est amenée en continu entre deux bandes sans fin de filtration 2, 3, passant entre les rouleaux 4, 4a, d'égalisation et de réglage d'épaisseur à entre-axes réglables.

Ces bandes sans fin sont amenées au moyen des rouleaux 5, 6, 7, 8, 9, à défiler successivement dans quatre enceintes successives rendues étanches de la façon que l'on décrira par la suite. Ces enceintes sont formées entre les faces opposées de cinq plateaux 10, 11, 12, 13, 14, disposés en série. Chaque plateau présente une face plane de préférence rainurée et, à l'opposé

0173603

une face évidée pour recevoir une membrane 15 pincée entre le plateau et un rebord périphérique 16 que présente la face évidée de ce plateau. Dans la succession des plateaux, la face plane de l'un est opposée à la face, à rebord 16 et munie d'une membrane 15, de l'autre.

Les membranes 15, gonflées par un fluide sous pression assurent la filtration de la suspension pendant son passage dans les enceintes. L'admission du fluide alimentant les membranes est réglable et modulable suivant les enceintes de façon à assurer une pression de filtration éventuellement différente suivant les enceintes, cette pression étant, en toute hypothèse, indépendante de l'épaisseur du gâteau de filtration.

L'ensemble des enceintes constitue un module M de filtration sur lequel sont exercées deux sortes d'actions, par le moyen, dans l'exemple traité, de vérins à double effet :

- une action de serrage des enceintes les unes sur les autres, au moyen de vérins 17, 17a, répartis en deux groupes antagonistes, chaque groupe agissant sur l'une des faces du module. Lors de cette action, le bord en saillie 16, de la face à membrane d'un plateau vient s'appliquer sur les bandes filtrantes qui sont donc pincées entre ce bord et la face plane du plateau suivant. L'étanchéité complète de l'enceinte est ainsi réalisée et la filtration, sous l'effet de la membrane, peut avoir lieu dans cette enceinte. On fait en sorte que la pression de serrage des plateaux par les vérins 17, 17a, soit totalement indépendante de la pression de filtration. On évite ainsi tout risque de fluage de la suspension solide-liquide,

- un mouvement de va-et-vient du module M, sous l'effet d'un vérin 18, entre deux positions, comme on le voit sur la figure, où la position extrême susceptible d'être atteinte par le module est esquissée en traits interrompus.

Chaque bande filtrante passe entre des rouleaux 19, 19a, pour l'une, 20, 20a pour l'autre, rouleaux qui sont agencés de façon à pincer entre eux les bandes et donc à provoquer l'arrêt de leur défilement.

Le gâteau déshydraté est évacué à la sortie de l'appareil au moyen de râcleurs 21, prévus à l'aval des derniers rouleaux, 22, 22a, entre lesquels défilent les bandes. Elles sont soumises chacune à un lavage continu dans des postes 23, 24, avant leur retour à l'entrée de l'appareil.

Un tel appareil fonctionne de la façon suivante :
La suspension solide-liquide prédéshydratée étant amenée en continu entre les bandes sans fin 2 et 3, les enceintes de filtration sont fermées par serrage des plateaux 10-14, au moyen des vérins 17, 17a. Ce serrage provoque simultanément le pincement des bandes 2 et 3 à la périphérie des plateaux ce qui assure l'étanchéité des enceintes.

Lorsque la pression de serrage atteint une valeur prédéterminée, le vérin 18 est alimenté en fluide comprimé à débit constant réglable, provoquant l'avancement, vers la position représentée en traits interrompus du module M constitué par l'ensemble des enceintes de filtration et également le déplacement des bandes de filtration 2, 3 se trouvant, à ce moment, pincées entre les bords des plateaux. Simultanément le fluide comprimé est admis sous les membranes 15 des plateaux, avec comme conséquence la mise en pression des enceintes de filtration entraînant l'extraction de l'eau interstitielle de la suspension solide-liquide enserrée entre la partie des bandes 2, 3, se trouvant à ce moment entre les plateaux 10-14.

Un détecteur de proximité, réglable en position longitudinale, permet de déterminer la course de déplacement du module en provoquant, en fin de cette course, l'arrêt de l'alimentation en fluide comprimé du vérin 18, donc l'arrêt du module M ainsi que la décompression des enceintes de filtration.

Le desserrage des plateaux est alors obtenu par décompression des vérins 17, 17a, suivie d'une alimentation en basse pression de l'autre face de ces vérins.

Des moyens (non représentés) tels que maillons, prévus entre les faces opposées des plateaux, communiquant le déplacement des plateaux extrêmes 10,14, aux plateaux intermédiaires 11, 12, 13, permettent l'ouverture simultanée de toutes les enceintes de filtration.

Cette ouverture achevée, un détecteur d'ouverture des enceintes de filtration ordonne le pincement de la bande sans fin 2, entre les rouleaux 19, 19a, et celui de la bande sans fin 3, entre les rouleaux 20, 20a, arrêtant pendant un laps de temps assez bref, par exemple 8 à 10 secondes, le défilement des bandes filtrantes. Un détecteur de pincement des bandes sans fin détermine alors le mouvement de retour accéléré du module M à sa position de départ, par alimentation en fluide comprimé de l'autre face du vérin 18.

En raison de l'immobilisation des bandes sans fin 2, 3, le mouvement de retour du module vers sa position initiale, provoque le déplacement entre les plateaux 10-14 de la partie des bandes 2,3, emprisonnant la suspension solide-liquide qui a été filtrée. Ce mouvement relatif du module et des bandes entraîne progressivement le gâteau filtré vers la sortie de l'appareil.

Un détecteur de proximité, réglable en position longitudinale permet de prédéterminer la course de retour du module en ordonnant l'arrêt de l'alimentation en fluide comprimé du vérin 18 et l'écartement les uns des autres des rouleaux 19, 19a, et 20, 20a, autorisant la remise en mouvement des bandes sans fin. Le cycle reprend : fermeture des enceintes par serrage des plateaux, et ainsi de suite. Le déplacement des bandes permet le râclage du gâteau formé lors d'un cycle précédent.

REVENDICATIONS

1. Appareil pour la séparation de la phase liquide d'une suspension solide-liquide, dans lequel la suspension préalablement épaissie est disposée entre deux bandes sans fin filtrantes et soumise à une pression au moyen d'un module presseur animé d'un mouvement de va-et-vient, ledit appareil comportant au moins deux enceintes étanches juxtaposées et disposées parallèlement l'une à l'autre, munies chacune d'une membrane gonflable assurant la pression de filtration, caractérisé en ce que chaque enceinte est constituée par deux plaques ou plateaux (10, 11, 12, 13, 14) disposés l'un en face de l'autre et dont l'une des faces est munie d'une membrane gonflable, la face munie d'une membrane de chaque plateau étant placée en regard de la face, non munie d'une membrane, de la plaque ou du plateau suivant.

2. Appareil suivant la revendication 1, caractérisé en ce que chaque enceinte est constituée par une succession de plaques pleines et de cadres enserrant chacun au moins une membrane (15).

3. Appareil suivant l'une quelconque des revendications précédentes, caractérisé en ce que l'étanchéité des enceintes constituant le module de filtration est assurée, sous l'effet d'une pression exercée sur les plaques ou plateaux, en vue de les appliquer les uns contre les autres, par pincement des bandes sans fin entre les faces opposées des plaques ou plateaux délimitant l'enceinte.

4. Appareil suivant la revendication 3, caractérisé en ce que chaque plateau présente une face plane, de préférence rainurée et, à l'opposé, une face évidée pour recevoir la membrane, pincée entre le plateau et un rebord périphérique (16) que présente la face évidée de ce plateau.

5. Appareil suivant l'une quelconque des revendications précédentes, caractérisé en ce que le moyen, tel que vérin (18) provoquant le mouvement de va-et-vient du module (M) de filtration et les moyens tels que vérins (17, 17a) provoquant le serrage les unes sur les autres des enceintes de filtration sont commandés de façon à réaliser, pendant la course aller du module, l'étanchéité des enceintes et l'opération de filtration.

- 2 -        0173603

6. Appareil suivant l'une quelconque des revendications précédentes, caractérisé en ce que les bandes sans fin sont soumises à l'action de rouleaux ou l'équivalent (19, 19a ; 20, 20a) bloquant entre eux ces bandes et provoquant l'arrêt de leur défilement pendant la course de retour du module de filtration, de façon, grâce au mouvement relatif ainsi créé entre les bandes et le module, à faire progresser vers la sortie de l'appareil le gâteau filtré produit dans les enceintes.

7. Appareil suivant l'une quelconque des revendications précédentes, caractérisé en ce que les enceintes de filtration sont disposées en série verticalement ou horizontalement.

1/1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl 4) |
|---|---|---|---|
| A | EP-A-0 063 991 (GUINARD DE SEPARATION) * Pages 4-7 * | 1,2,3, 5,7 | B 01 D 33/04 B 30 B 9/10 B 30 B 9/24 |
| A | DE-A-3 221 435 (HITACHI) * Page 5, lignes 33-37; pages 6-9 * | 1,3,7 | |
| D,A | FR-A-2 374 937 (LAUTRETTE) * Pages 3-7 * | 1,5,6 | |
| A | DE-A-2 043 156 (INOUYE KINZOKU KOGYO) * Pages 5-11 * | 1,2,4, 7 | |
| A | FR-A-2 389 401 (ALB KLEIN) | | **DOMAINES TECHNIQUES RECHERCHES (Int. Cl.4)** |
| A | FR-A-2 188 496 (MAXWELL DAVIDSON) | | B 01 D B 30 B |

Le présent rapport de recherche a été établi pour toutes les revendications

| Lieu de la recherche | Date d'achèvement de la recherche | Examinateur |
|---|---|---|
| LA HAYE | 08-11-1985 | DE PAEPE P.F.J. |